# FASCICULE DE BREVET EUROPEEN

(11) **EP 1 408 805 B1**
(45) Date de publication et mention de la délivrance du brevet: **30.08.2006**
(21) Numéro de dépôt: 02787143.3
(22) Date de dépôt: 04.07.2002
(51) Int. Cl.: A47J 31/44

(54) **CAFETIERE COUTTE-A-GOUTTE COMPORTANT UN DISPOSITIF DE DOSAGE DE LA MOUTURE DE CAFE**
TROPFKAFFEEMASCHINE MIT EINER VORRICHTUNG ZUM ABMESSEN VON KAFFEEMEHL
DRIP-TYPE COFFEE MAKER COMPRISING A DEVICE FOR MEASURING GROUND COFFEE

(30) Priorité: 11.07.2001 FR 0109253
(43) Date de publication de la demande: 21.04.2004
(73) Titulaire: SEB S.A., 69130 Ecully (FR)
(72) Inventeur: FOURNY, Jacky, F-72610 Bérus (FR); GEROULT, Marc, 72610 Oisseau-Le-Petit (France) (FR)
(74) Mandataire: Kiehl, Hubert
(86) Numéro de dépôt international: PCT/FR2002/002333
(87) Numéro de publication internationale: WO 2003/007766

(56) Documents cités:
- EP-A- 0 655 213
- DE-U- 29 701 818
- US-A- 5 778 764

## Description

La présente invention se rapporte aux cafetières ménagères goutte-à-goutte avec un boîtier et comportant, dans ce boîtier, un porte-filtre dans lequel est versée de la mouture de café et qui est monté mobile dans le boîtier, et un dispositif de dosage de la mouture de café versée dans le porte-filtre, comprenant des moyens mécaniques mobiles couplés au porte-filtre, réagissant à la quantité de mouture de café versée dans le porte-filtre, et propres à entraîner un organe d'indication visuelle de la quantité de mouture de café désirée.

On sait qu'avec les cafetières goutte-à-goutte, le dosage de la quantité de mouture de café à filtrer constitue une opération importante dans la préparation d'un bon café car elle influe beaucoup sur la force et la qualité aromatique de l'infusion de café. De fait, l'opération de dosage de la mouture de café doit être effectuée avec précision pour obtenir un bon arôme de l'infusion de café.

Dans une cafetière goutte-à-goutte équipée d'un dispositif de dosage connu de ce genre, tel que décrit dans le document FR-A-2 749 494, les moyens mécaniques du dispositif de dosage comprennent au moins un organe déformable constitué par un parallélogramme formé de quatre bras articulés les uns aux autres, dont l'un est mécaniquement relié au porte-filtre mobile par l'intermédiaire d'une pièce de support, et dont un autre se prolonge par une tige de liaison ayant une extrémité libre qui est conformée en un doigt horizontal constituant l'organe d'indication visuelle de la quantité de mouture de café désirée. Lorsque la mouture de café est versée dans le porte-filtre, le poids de ce dernier augmente, et sous l'effet de ce poids, le porte-filtre provoque la déformation du parallélogramme, lequel entraîne alors le doigt indicateur jusqu'à l'obtention visuelle de la quantité de mouture de café désirée pour laquelle le parallélogramme reste en position stable. Ainsi, l'ensemble formé par le porte-filtre et le parallélogramme déformable constitue en soi une balance dite à parallélogramme qui permet de doser par pesage la quantité de mouture de café désirée. Toutefois, ce parallélogramme déformable à bras articulés constitue un organe mécanique qui est compliqué, onéreux, difficile à mettre en place et nécessitant un dimensionnement rigoureux pour obtenir une bonne précision du dosage de la mouture de café, ce qui est difficile à maîtriser dans une fabrication en grande série de cafetières.

L'invention a notamment pour but de remédier à ces inconvénients et de réaliser une cafetière goutte-à-goutte, du type exposé ci-dessus, dans laquelle le dispositif de dosage de la mouture de café soit d'une réalisation simple, économique et fiable.

Selon l'invention, les moyens mécaniques comprennent une pièce de basculement qui est montée pivotante autour d'un axe fixe dans le boîtier et sur laquelle est disposé en appui le porte-filtre, ladite pièce de basculement comprenant, d'un côté, l'organe d'indication visuelle, et du côté opposé à l'organe d'indication visuelle par rapport à son axe de pivotement, au moins un organe d'équilibrage permettant de maintenir ladite pièce en une position stable lorsque la quantité de mouture de café désirée est obtenue.

Ainsi, cette pièce de basculement constitue désormais une pièce mécaniquement indéformable qui est facile à réaliser, peu coûteuse, parfaitement adaptée à une fabrication en grande série, et réagissant par simple basculement à la quantité de mouture de café versée dans le porte-filtre. L'ensemble formé par le porte-filtre en appui sur la pièce de basculement, ainsi que l'organe d'équilibrage, constitue en soi une balance dite à bascule, et non plus une balance à parallélogramme comme dans l'art antérieur, qui est plus fiable et qui permet de doser par pesage, d'une manière simple et avec une précision optimale, la quantité de mouture de café désirée par le consommateur . Par ce dosage très précis de la mouture de café, on obtient dès lors un excellent arôme de l'infusion de café une fois confectionnée.

Selon un mode de réalisation préféré, la pièce de basculement est constituée par un fléau en forme de U qui s'étend transversalement autour du porte-filtre, dont les deux branches latérales sont montées articulées sur deux pivots alignés portés par le boîtier et définissant l'axe de pivotement du fléau, dont la branche centrale est munie de l'organe d'indication visuelle, et dont les extrémités libres des deux branches latérales sont munies respectivement de deux organes d'équilibrage, le porte-filtre comprenant deux moyens d'appui s'appliquant respectivement sur les deux branches latérales du fléau en U.

Selon une autre caractéristique de l'invention, la cafetière goutte-à-goutte, dans laquelle le porte-filtre est susceptible d'être fermé par un couvercle solidaire du boîtier, et présente un fond pourvu d'un orifice d'écoulement associé à un clapet mobile dont l'ouverture et la fermeture sont commandées par un levier monté pivotant dans le boîtier et en contact par l'une de ses extrémités avec le porte-filtre, est caractérisée en ce qu'elle comporte de plus un mécanisme permettant de rompre le contact entre le levier et le porte-filtre lors de l'ouverture du couvercle, avant utilisation du dispositif de dosage de la mouture de café.

Ce mécanisme de rupture permet avantageusement d'effectuer l'opération de dosage par pesée de la mouture de café, le couvercle du porte-filtre étant ouvert, sans aucun frottement ni contact parasite au niveau du porte-filtre, augmentant ainsi la précision du dosage de la quantité de mouture de café désirée.

Les caractéristiques et avantages de l'invention ressortiront d'ailleurs de la description qui va suivre, à titre d'exemple non limitatif, en référence aux dessins annexés dans lesquels :
- la figure 1 est une vue schématique en coupe verticale d'une cafetière comportant un dispositif de dosage de la mouture de café selon l'invention, le couvercle du porte-filtre étant ouvert et le porte-filtre étant montré dans une position dans laquelle il ne contient pas de mouture de café ;
- la figure 2 est une vue schématique en perspective, à plus grande échelle et avec arrachement partiel, du dispositif de dosage associé au porte-filtre occupant sa position illustrée à la figure 1 ;
- la figure 3 est une vue partielle en coupe du boîtier de la cafetière comportant une fenêtre dans laquelle apparaît un symbole indiquant l'absence de mouture de café lorsque le porte-filtre est dans sa position illustrée à la figure 1 ;
- la figure 4 est une vue analogue à la figure 1, le porte-filtre étant montré dans une position dans laquelle il contient une quantité définie de mouture de café ;
- la figure 5 est une vue analogue à la figure 2, le porte-filtre occupant sa position illustrée à la figure 4 ;
- la figure 6 est une vue analogue à la figure 3, montrant un symbole correspondant à un nombre défini de tasses de café lorsque le porte-filtre est dans sa position illustrée à la figure 4 ;
- la figure 7 est une vue analogue à la figure 4, après fermeture du couvercle du porte-filtre ;
- la figure 8 est une vue analogue à la figure 5, le couvercle du porte-filtre étant supposé en position de fermeture telle qu'illustrée à la figure 7 ; et
- la figure 9 est une vue analogue à la figure 6, montrant un symbole particulier lorsque le couvercle du porte-filtre est en position de fermeture illustrée à la figure 7 ;

Sur ces différentes figures, les mêmes références se rapportent aux mêmes éléments.

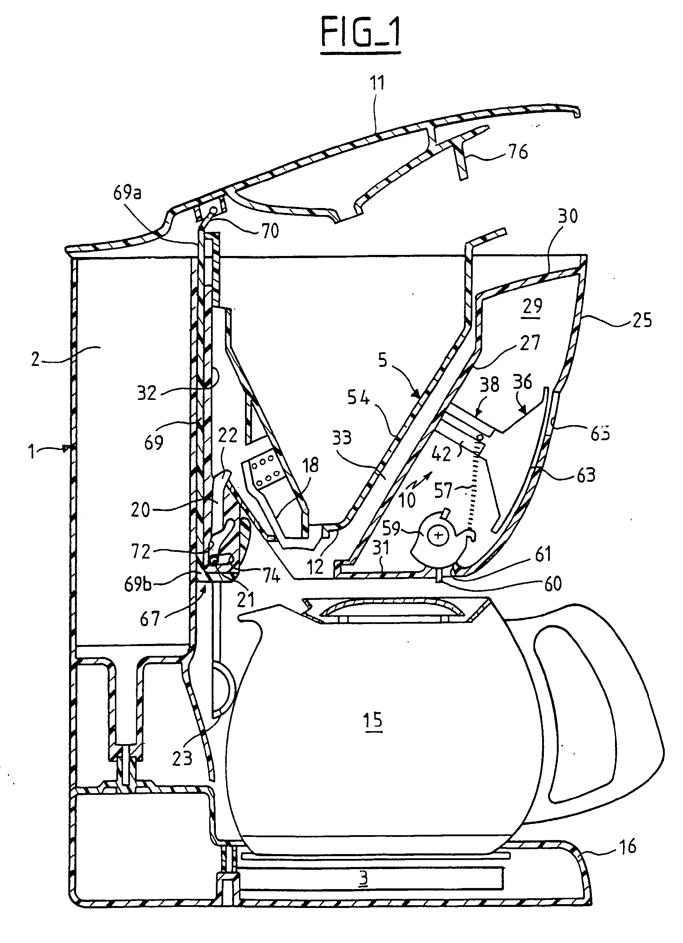

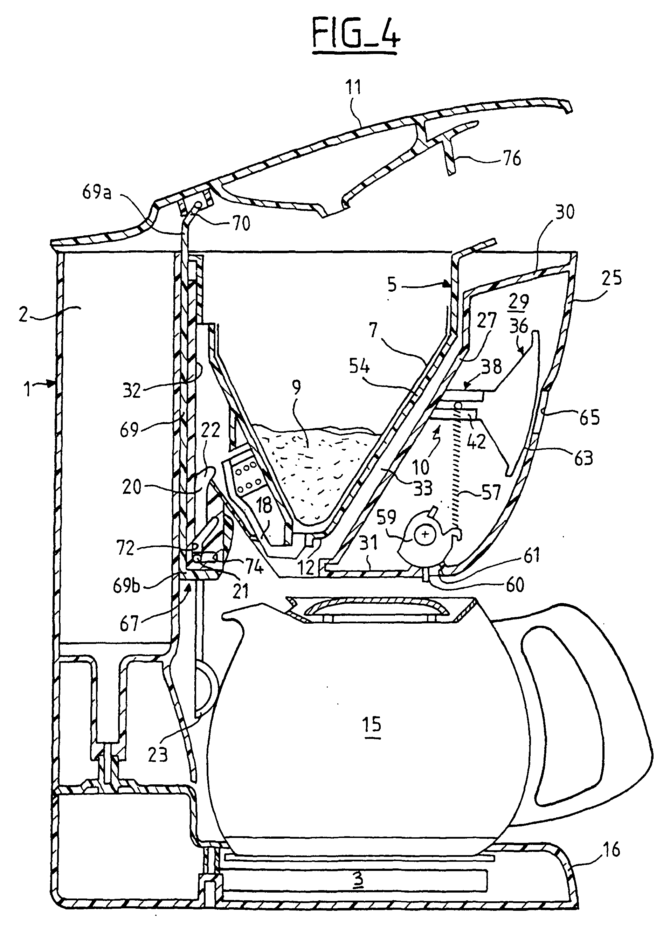

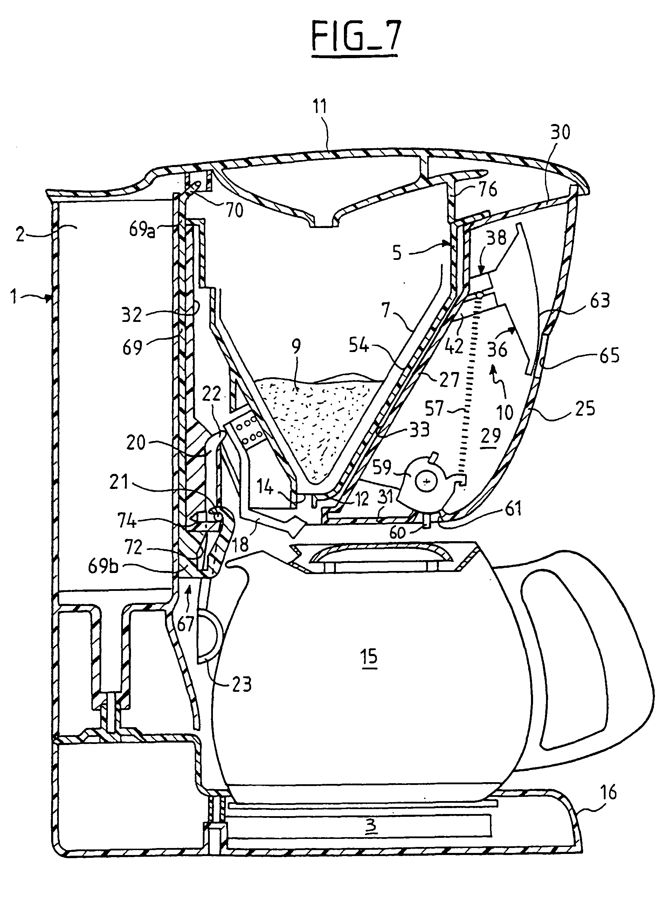

La cafetière ménagère goutte-à-goutte représentée aux figures 1, 4 et 7 comprend, dans un boîtier 1, un réservoir d'eau froide 2, un chauffe-eau 3 alimenté par ce réservoir et alimentant lui-même, par un tube d'eau chaude ascendant (non figuré), une goulotte d'arrosage (non figurée) agencée au-dessus d'un porte-filtre 5 monté mobile dans le boîtier et destiné à contenir un élément filtrant 7 (figures 4 et 7), tel qu'un filtre papier ou un filtre or dit permanent, dans lequel est versée une quantité définie de mouture de café 9 (figures 4 et 7), ainsi qu'un dispositif de dosage de la mouture de café versée dans le porte-filtre 5, désigné par la référence globale 10.

La cafetière comporte en outre un couvercle 11 qui s'étend au-dessus du réservoir d'eau 2 et du porte-filtre 5, et qui est monté articulé sur le boîtier 1 par tout moyen d'articulation approprié.

Le porte-filtre 5 comprend un fond 12 pourvu d'un orifice d'écoulement 14, visible sur la figure 7, qui est situé au-dessus d'une verseuse 15 collectrice d'infusion reposant sur un socle 16 du boîtier, et qui est associé, d'une manière connue en soi, à un clapet 18 monté mobile sur le porte-filtre 5 et destiné notamment à faire office de stop-gouttes lors du retrait de la verseuse 15 au cours de la phase d'infusion. L'ouverture et la fermeture du clapet 18 sont commandées, de façon connue, par un levier 20 qui est monté pivotant dans le boîtier autour d'un axe 21 et dont l'une 22 des extrémités est en contact, au cours de la phase d'infusion, avec le clapet 18 comme illustré à la figure 7, l'autre extrémité 23 du levier 20 étant en contact avec la verseuse 15.

En regard des figures 1, 4 et 7, le boîtier 1 présente une paroi latérale frontale 25, légèrement bombée, et une paroi latérale interne 27 conformée de manière à délimiter, avec cette paroi frontale 25, un compartiment 29 dans lequel est agencé en majeure partie le dispositif de dosage 10.

Dans l'exemple de réalisation représenté sur les figures 1, 4 et 7, les parois frontale 25 et interne 27 du boîtier sont reliées entre elles par deux parois sensiblement horizontales, respectivement supérieure 30 et inférieure 31. Dans cet exemple, le boîtier 1 présente également une paroi intérieure verticale 32 délimitant avec la paroi interne 27 un logement 33, de profil adapté, dans lequel est disposé le porte-filtre 5.

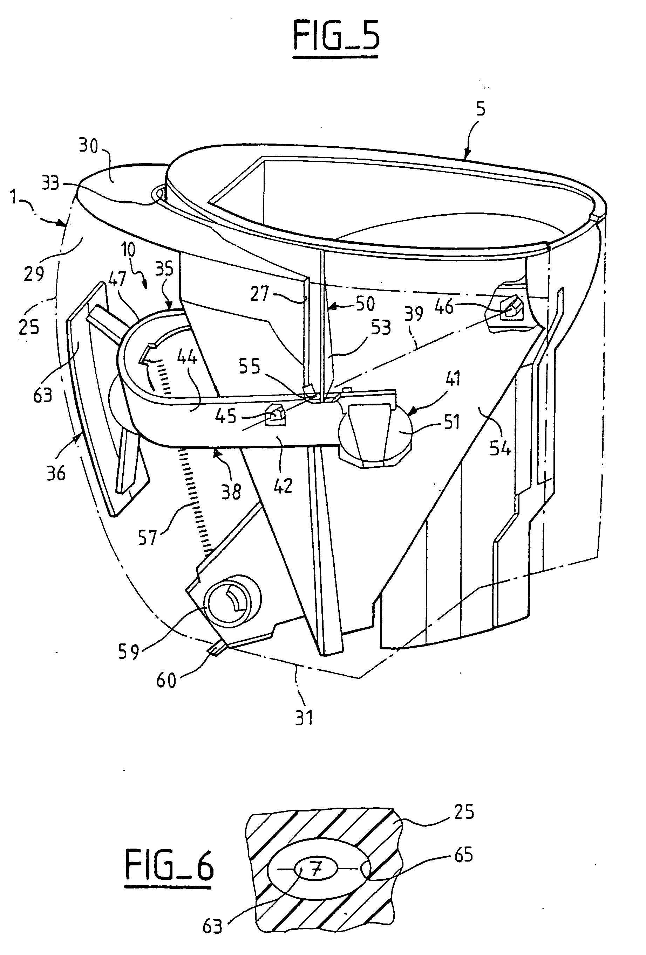

On va maintenant décrire le dispositif de dosage 10 en se reportant uniquement aux figures 4 et 5 selon lesquelles une quantité de mouture de café désirée 9 (figure 4) est obtenue à l'aide du dispositif de dosage.

Ce dispositif de dosage 10 de la mouture de café à filtrer, mieux visible à la figure 5, comprend des moyens mécaniques mobiles 35 couplés au porte-filtre 5, réagissant à la quantité de mouture de café versée dans le porte-filtre 5, et propres à entraîner un organe 36 d'indication visuelle de la quantité de mouture de café désirée 9 (figure 4).

Selon l'invention, les moyens mécaniques 35 comprennent une pièce de basculement 38 qui est montée pivotante autour d'un axe fixe 39 dans le boîtier et sur laquelle est disposé en appui le porte-filtre 5, ladite pièce de basculement 38 comprenant, d'un côté, l'organe d'indication visuelle 36, et du côté opposé à cet organe d'indication visuelle 36 par rapport à son axe de pivotement 39, au moins un organe d'équilibrage 41 permettant de maintenir la pièce de basculement 38 en une position stable lorsque la quantité de mouture de café désirée 9 (figure 4) est obtenue.

Dans une forme de réalisation préférée illustrée aux figures 4 et 5, la pièce de basculement 38 est constituée par un fléau 42 en forme de U, mieux visible sur la figure 5, qui est logé dans le compartiment 29 (figure 4) en s'étendant transversalement autour du porte-filtre 5, et dont les deux branches latérales 44, dont une seule est visible sur la figure 5, sont montées articulées respectivement sur deux pivots alignés 45, 46 portés par la paroi interne 27 du boîtier 1 et définissant l'axe de pivotement 39 du fléau 42.

Comme on le voit bien sur la figure 5, la branche centrale 47 du fléau 42 est munie de l'organe d'indication visuelle 36, tandis que les extrémités libres des deux branches latérales 44 du fléau 42 sont munies respectivement de deux organes d'équilibrage 41, dont un seul est visible sur la figure 5, traversant chacun une ouverture latérale (non figurée) pratiquée dans la paroi frontale 25 du boîtier. En outre, le porte-filtre 5 comprend deux moyens d'appui 50, dont un seul est visible sur la figure 5, s'appliquant respectivement sur les deux branches latérales 44 du fléau 42.

Dans cet exemple de réalisation, figure 5, les deux organes d'équilibrage 41 sont constitués chacun par un disque métallique 51 formant masse d'équilibrage qui est disposé dans un logement pratiqué à chaque extrémité libre des deux branches latérales 44 du fléau 42. Les deux moyens d'appui 50 sont constitués respectivement par deux pattes verticales opposées 53 disposées sur la paroi latérale 54 du porte-filtre 5 et s'appliquant respectivement sur deux zones d'appui 55, dont une seule est visible sur la figure 5, formées respectivement sur les deux branches latérales 44 du fléau 42 et situées à proximité des extrémités libres de ces branches 44, au niveau de l'ouverture latérale pratiquée dans la paroi frontale 25 du boîtier.

En regard des figures 4 et 5, le fléau 42 est sollicité par un ressort spiralé de traction 57 dont une extrémité est ancrée sur la branche centrale 47 du fléau 42, et dont l'autre extrémité est accrochée sur une molette de tarage 59 montée tournante dans le compartiment 29, au-dessous de l'axe de pivotement 39 du fléau 42, et dotée d'une petite manette de commande 60 disposée en saillie dans une lumière de débattement 61 (figure 4) ménagée dans la paroi inférieure de liaison 31 du boîtier. Par action de la manette 60, la molette 59 permet d'ajuster avec précision la tension du ressort 57. Cette molette de tarage 59 permet avantageusement de s'affranchir des tolérances de fabrication de la cafetière ainsi que de la dérive liée aux déformations du matériau, et d'adapter le dispositif de dosage à bascule au type d'élément filtrant utilisé 7 (filtre papier, filtre or...) .

L'ensemble formé par le porte-filtre 5 en appui par ses pattes 53 sur le fléau 42, ainsi que les deux disques 51, constitue en soi une balance à bascule permettant de doser de façon précise la quantité de mouture de café désirée. En effet, lorsque la mouture de café est versée dans le porte-filtre 5, le poids du porte-filtre augmente, et sous l'effet de ce poids, les pattes d'appui 53 du porte-filtre transmettent le poids et provoquent le basculement du fléau 42, à l'encontre de la force du ressort 57, jusqu'à l'obtention de la quantité de mouture de café désirée pour laquelle les disques 51 maintiennent le fléau 42 en un équilibre stable.

Dans l'exemple de réalisation représenté sur les figures 4 et 5, l'organe d'indication visuelle 36 est constitué par une plaquette arquée 63 solidaire de la branche centrale 47 du fléau 42 et portant en façade des symboles inscrits en colonne et désignant chacun un nombre donné de tasses à café. Cette plaquette 63 est propre à se déplacer suivant un arc de cercle, par suite du basculement du fléau 42, pour venir occuper une position dite de dosage dans laquelle le symbole correspondant au nombre choisi de tasses à café apparaît dans une fenêtre transparente 65 (figure 4) pratiquée dans la paroi frontale 25 du boîtier, et pour laquelle la quantité de mouture de café versée dans le porte-filtre 5 est obtenue.

De préférence, la plaquette 63 et le fléau 42 sont réalisés d'une seule pièce en matière plastique.

Selon une autre caractéristique de l'invention, la cafetière goutte-à-goutte comporte de plus un mécanisme 67 (figures 1, 4 et 7) permettant de rompre le contact entre le levier 20 et le clapet 18 solidaire du porte-filtre 5 lors de l'ouverture du couvercle 11 de la cafetière, avant utilisation du dispositif de dosage 10 décrit ci-dessus.

Ce mécanisme de rupture 67, figures 1, 4 et 7, comporte un coulisseau 69 monté verticalement dans le boîtier 1, à l'arrière de la paroi verticale 32 du boîtier, et présentant une extrémité supérieure 69a reliée au couvercle 11 par une charnière souple 70, ainsi qu'une extrémité inférieure 69b dotée d'au moins une lumière verticale formant came 72 dans laquelle est susceptible de se déplacer l'axe de pivotement 21 du levier 20 qui est également monté mobile dans une lumière horizontale 74 pratiquée à la base de la paroi verticale 32 du boîtier 1.

A partir de la position de fonctionnement de la cafetière illustrée à la figure 7 et en considérant que le porte-filtre 5 ne contient pas encore de mouture de café, le coulisseau 69 est animé, lors de l'ouverture du couvercle 11 comme montré à la figure 1, d'un mouvement de translation ascendante au cours duquel le levier 20 pivote et se sépare du clapet 18 par suite du déplacement de l'axe 21 du levier 20 à la fois dans la lumière verticale formant came 72 du coulisseau 69 et dans la lumière horizontale 74 de la paroi 32 du boîtier, voir figure 1. Les lumières conjuguées 72 et 74 sont dimensionnées de telle sorte qu'en fin de course du coulisseau 69, correspondant à l'ouverture complète du couvercle 11, l'axe 21 du levier 20 est en butée contre les parties inférieure et arrière, respectivement des lumières 72 et 74, tel qu'illustré à la figure 1. En cette position, figure 1, l'extrémité 23 du levier 20 n'est pas influencée par la mise en place ou le retrait de la verseuse 15.

Grâce à ce mécanisme 67 assurant la rupture entre le levier 20 et le clapet 18 du porte-filtre 5 lors de l'ouverture du couvercle 11, on comprend que l'opération de dosage de la mouture de café versée dans le porte-filtre 5 peut dès lors être effectuée à l'aide du dispositif de dosage 10 conforme à l'invention sans le moindre frottement ni contact parasite au niveau du porte-filtre 5, garantissant ainsi un dosage d'une précision optimale.

On va maintenant expliciter le fonctionnement du dispositif de dosage 10 décrit précédemment, en supposant par exemple que l'utilisateur désire confectionner sept tasses à café.

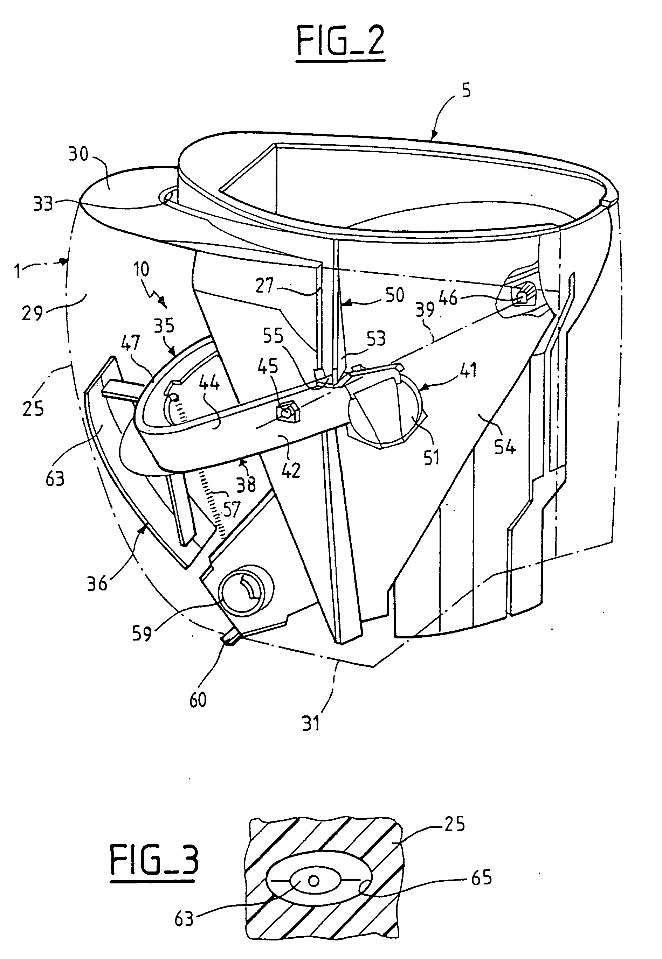

La cafetière étant dans sa position initiale illustrée à la figure 1, c'est-à-dire couvercle 11 ouvert, levier 20 séparé du clapet 18 et porte-filtre 5 vide de mouture de café, le fléau 42 occupe une position initiale de rappel (figures 1 et 2) dans laquelle la partie supérieure du porte-filtre 5 est en saillie prononcée hors de son logement 33, tandis que la plaquette 63 d'indication visuelle est positionnée de manière que le symbole « 0 » correspondant à aucune tasse de café, donc à l'absence de mouture de café dans le porte-filtre 5, apparaisse dans la fenêtre 65 de la paroi frontale 25 du boîtier comme montré sur la figure 3. Cette position initiale du fléau 42 constitue donc une position de référence pour un dosage précis de la mouture de café.

Lorsque l'utilisateur verse maintenant de la mouture de café 9 dans l'élément filtrant 7 placé dans le porte-filtre 5, figure 4, le levier 20 reste séparé du clapet 18 et le poids du porte-filtre 5 augmente de sorte que, sous l'effet de ce poids, le porte-filtre 5 descend verticalement dans son logement 33 et, par ses pattes d'appui 53 (figure 5), provoque alors le basculement du fléau 42 à l'encontre de la force du ressort 57, voir figure 5. Par ce basculement du fléau 42, la branche centrale 47 de celui-ci entraîne vers le haut, suivant un arc de cercle, la plaquette d'indication visuelle 63. L'utilisateur continue à verser de la mouture de café dans le porte-filtre 5 jusqu'au moment où, par suite du basculement du fléau 42, le symbole « 7 », porté par la plaquette 63 et correspondant à sept tasses à café souhaitées par l'utilisateur, apparaît dans la fenêtre de visualisation 65 de la paroi frontale 25 du boîtier comme montré sur la figure 6. La quantité exacte de mouture de café désirée étant obtenue, le fléau 42 n'est donc plus sollicité et occupe une position de dosage dans laquelle il reste en équilibre stable au moyen des disques d'équilibrage 51 (figure 5). Comme on le voit sur les figures 4 et 5, en fin de dosage, la partie supérieure du porte-filtre 5 est en légère saillie hors de son logement 33.

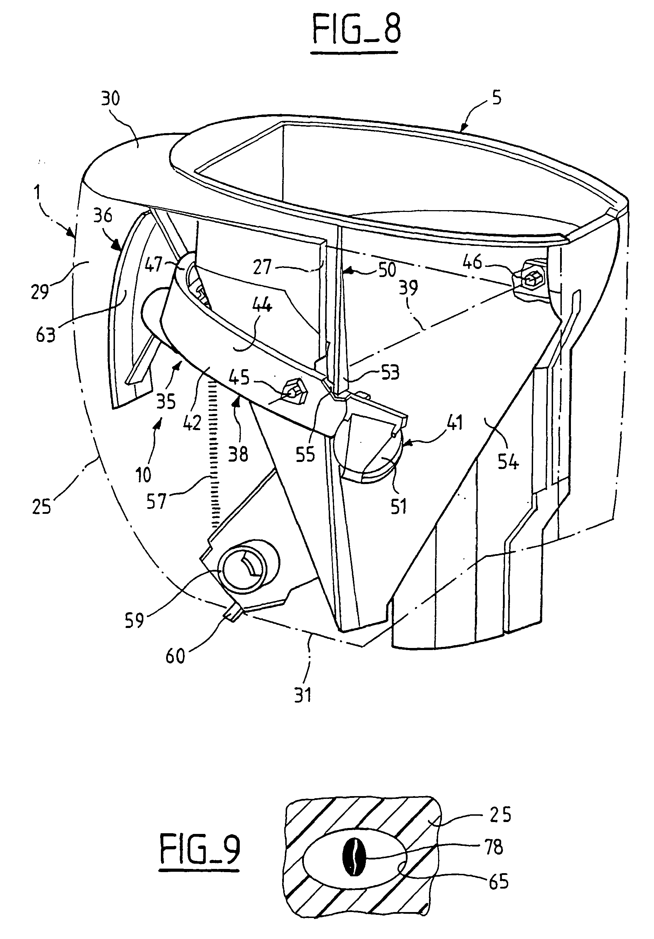

Après dosage de la mouture de café 9 (figure 4), l'utilisateur ferme le couvercle 11 de la cafetière. Lors de cette fermeture du couvercle 11, figure 7, le coulisseau 69 descend sous l'action du couvercle qui lui est relié par la charnière souple 70 et entraîne, via les lumières conjuguées 72 et 74, un déplacement de l'axe 21 du levier 20, lequel levier pivote et revient en contact avec le clapet 18 solidaire du porte-filtre 5. Simultanément, le couvercle 11, par un organe d'appui constitué, par exemple, par une patte interne 76 (figures 1, 4 et 7) formée dans le couvercle, vient s'appliquer sur la partie supérieure du porte-filtre 5 qui redescend verticalement pour s'enfoncer complètement dans son logement 33. Lors de sa descente, le porte-filtre 5 provoque, par ses pattes d'appui 53 (figure 8), un nouveau basculement du fléau 42 à l'encontre de la force du ressort 57. Le fléau 42 passe alors de sa position de dosage (figures 4 et 5) à une position finale (figures 7 et 8) dans laquelle un symbole particulier, tel qu'un grain de café 78 représenté sur la figure 9 et porté par la plaquette 63, apparaît dans la fenêtre de visualisation 65 de la paroi frontale 25 du boîtier, indiquant alors à l'utilisateur que la phase d'infusion de la cafetière peut commencer avec la quantité exacte de mouture de café désirée. Le couvercle 11 étant fermé, figure 7, le porte-filtre 5 est maintenu enfoncé dans son logement 33 par la patte 76 du couvercle, et le fléau 42 n'est donc plus sollicité, restant ainsi dans sa position finale telle que montrée sur les figures 7 et 8. En cette position, figure 7, l'extrémité 23 du levier 20 peut être influencée par la mise en place ou le retrait de la verseuse 15.

Lorsque l'utilisateur souhaite ensuite confectionner un autre nombre de tasses à café, la cafetière étant dans sa position de fonctionnement illustrée à la figure 7, il ouvre le couvercle 11 et vide le porte-filtre 5. Lors de l'ouverture du couvercle 11, le porte-filtre 5 n'étant pas sollicité, le fléau 42 bascule alors en sens inverse sous l'action du ressort 57 et fait remonter le porte-filtre 5 pour venir occuper sa position initiale de rappel illustrée aux figures 1 et 2, tandis que le coulisseau 69 remonte par l'intermédiaire de sa charnière souple 70 pour provoquer la rupture du contact entre le levier 20 et le clapet 18 solidaire du porte-filtre 5 comme montré à la figure 1. Une nouvelle opération de dosage de la mouture de café est alors effectuée à l'aide du dispositif de dosage 10.

## Revendications

1. Cafetière goutte-à-goutte avec un boîtier et comportant, dans ce boîtier (1), un porte-filtre (5) dans lequel est versée de la mouture de café (9) et qui est monté mobile dans le boîtier, et un dispositif (10) de dosage de la mouture de café versée dans le porte-filtre (5), comprenant des moyens mécaniques mobiles (35) couplés au porte-filtre (5), réagissant à la quantité de mouture de café (9) versée dans le porte-filtre (5), et propres à entraîner un organe (36) d'indication visuelle de la quantité de mouture de café désirée, **caractérisée en ce que** les moyens mécaniques (35) comprennent une pièce de basculement (38) qui est montée pivotante autour d'un axe fixe (39) dans le boîtier et sur laquelle est disposé en appui le porte-filtre (5), ladite pièce de basculement (38) comprenant, d'un côté, l'organe d'indication visuelle (36), et du côté opposé à l'organe d'indication visuelle (36) par rapport à son axe de pivotement (39), au moins un organe d'équilibrage (41) permettant de maintenir ladite pièce (38) en une position stable lorsque la quantité de mouture de café désirée est obtenue.

2. Cafetière goutte-à-goutte selon la revendication 1, **caractérisée en ce que** la pièce de basculement (38) est constituée par un fléau (42) en forme de U qui s'étend transversalement autour du porte-filtre (5), dont les deux branches latérales (44) sont montées articulées sur deux pivots alignés (45, 46) portés par le boîtier (1) et définissant l'axe de pivotement (39) du fléau (42), dont la branche centrale (47) est munie de l'organe d'indication visuelle (36), et dont les extrémités libres des deux branches latérales (44) sont munies respectivement de deux organes d'équilibrage (41), le porte-filtre (5) comprenant deux moyens d'appui (50) s'appliquant respectivement sur les deux branches latérales (44) du fléau en U (42).

3. Cafetière goutte-à-goutte selon la revendication 2, **caractérisée en ce que** les deux moyens d'appui (50) sont constitués respectivement par deux pattes (53) faisant saillie de la paroi latérale (54) du porte-filtre (5) et s'appliquant sur deux zones d'appui (55), de profil adapté, formées respectivement sur les deux branches latérales (44) du fléau en U (42) et situées à proximité des extrémités libres de ces deux branches (44).

4. Cafetière goutte-à-goutte selon la revendication 2 ou 3, **caractérisée en ce que** les deux organes d'équilibrage (41) sont constitués chacun par un disque métallique (51) formant masse d'équilibrage qui est disposé dans un logement pratiqué à chaque extrémité libre des deux branches latérales (44) du fléau en U (42).

5. Cafetière goutte-à-goutte selon l'une des revendications 2 à 4, **caractérisée en ce que** le fléau en U (42) est sollicité par un ressort de traction (57) dont une extrémité est ancrée sur la branche centrale (47) du fléau (42), et dont l'autre extrémité est accrochée sur une molette de tarage (59) disposée dans le boîtier (1), au-dessous de l'axe de pivotement (39) du fléau (42), et permettant d'ajuster la tension du ressort (57).

6. Cafetière goutte-à-goutte selon l'une quelconque des revendications précédentes, **caractérisée en ce que** la pièce de basculement (38) et l'organe d'indication visuelle (36) sont réalisés d'une seule pièce en matière plastique.

7. Cafetière goutte-à-goutte selon l'une quelconque des revendications précédentes, dans laquelle le porte-filtre (5) est susceptible d'être fermé par un couvercle (11) solidaire du boîtier (1), et présente un fond (12) pourvu d'un orifice d'écoulement (14) associé à un clapet mobile (18) dont l'ouverture et la fermeture sont commandées par un levier (20) monté pivotant dans le boîtier (1) et en contact par l'une (22) de ses extrémités avec le porte-filtre (5), **caractérisée en ce qu'**elle comporte de plus un mécanisme (67) permettant de rompre le contact entre le levier (20) et le porte-filtre (5) lors de l'ouverture du couvercle (11), avant utilisation du dispositif (10) de dosage de la mouture de café.

8. Cafetière goutte-à-goutte selon la revendication 7, **caractérisée en ce que** le mécanisme de rupture (67) comporte un coulisseau (69) monté verticalement dans le boîtier (1), et présentant une extrémité supérieure (69a) reliée au couvercle (11) par une charnière souple (70), ainsi qu'une extrémité inférieure (69b) dotée d'au moins une lumière formant came (72) dans laquelle est susceptible de se déplacer l'axe de pivotement (21) du levier (20) qui est monté mobile à cet effet dans le boîtier (1), ledit coulisseau (69) étant animé, lors de l'ouverture du couvercle (11), d'un mouvement de translation ascendante au cours duquel le levier (20) se sépare du porte-filtre (5) par suite du déplacement de l'axe (21) du levier (20).

## Claims

1. Drip-type coffee maker with a casing and comprising, in this casing (1), a filter holder (5) into which ground coffee (9) is poured and which is mounted so as to be able to move in the casing, and a device (10) for measuring the ground coffee poured into the filter holder (5), comprising movable mechanical means (35) coupled to the filter holder (5), reacting to the quantity of ground coffee (9) poured into the filter holder (5), and able to drive a member (36) for visual indication of the required quantity of ground coffee, **characterised in that** the mechanical means (35) comprise a tilting piece (38) which is mounted so as to pivot about a fixed axis (39) in the casing and on which the filter holder (5) is disposed in abutment, said tilting piece (38) comprising, on one side, the visual indication member (36) and, on the side opposite to the visual indication member (36) with respect to its pivot axis (39), at least one balancing member (41) for holding said piece (38) in a stable position when the required quantity of ground coffee is obtained.

2. Drip-type coffee maker according to claim 1, **characterised in that** the tilting piece (38) consists of a U-shaped beam (42) that extends transversely around the filter holder (5), the two lateral arms (44) of which are mounted articulated on two aligned pivots (45, 46) carried by the casing (1) and defining the pivot axis (39) of the beam (42), the central arm (47) of which is provided with the visual indication member (36), and the free ends of the two lateral arms (44) of which are provided respectively with two balancing members (41), the filter holder (5) comprising two abutment means (50) applied respectively on the two lateral arms (44) of the U-shaped beam (42).

3. Drip-type coffee maker according to claim 2, **characterised in that** the two abutment means (50) consist respectively of two lugs (53) projecting from the lateral wall (54) of the filter holder (5) and applied on two abutment zones (55) of suitable profile, formed respectively on the two lateral arms (44) of the U-shaped beam (42) and situated close to the free ends of these two arms (44).

4. Drip-type coffee maker according to claim 2 or 3, **characterised in that** the two balancing members (41) each consist of a metal disc (51) forming a balancing mass that is disposed in a housing formed at each free end of the two lateral arms (44) of the U-shaped beam (42).

5. Drip-type coffee maker according to one of claims 2 to 4, **characterised in that** the U-shaped beam (42) is acted on by a draw spring (57), one end of which is anchored on the central arm (47) of the beam (42), and the other end of which is attached to a calibration knob (59) disposed in the casing (1), below the pivot axis (39) of the beam (42), and making it possible to adjust the tension of the spring (57).

6. Drip-type coffee maker according to any one of the preceding claims, **characterised in that** the tilting piece (38) and the visual indication member (36) are produced in a single piece from plastics material.

7. Drip-type coffee maker according to any one of the preceding claims, in which the filter holder (5) is able to be closed by a lid (11) fixed to the casing (1) and has a bottom (12) provided with a flow orifice (14) associated with a moving flap (18), the opening and closing of which are controlled by a lever (20) pivotally mounted in the casing (1) and in contact, through one (22) of its ends, with the filter holder (5), **characterised in that** it also comprises a mechanism (67) for breaking contact between the lever (20) and the filter holder (5) when the lid (11) is opened, before the use of the ground coffee measuring device (10).

8. Drip-type coffee maker according to claim 7, **characterised in that** the breaking mechanism (67) comprises a slide (69) mounted vertically in the casing (1) and having a top end (69a) connected to the lid (11) by a flexible hinge (70) and a bottom end (69b) provided with at least one aperture forming a cam (72) in which there is able to move the pivot axis (21) of the lever (20) that is mounted so as to be able to move for this purpose in the casing (1), the said slide (69) being driven, when the lid (11) is opened, in an ascending translation movement during which the lever (20) separates from the filter holder (5) following the movement of the axis (21) of the lever (20).

## Patentansprüche

1. Tropfkaffeemaschine mit einem Gehäuse und in diesem Gehäuse (1) einem Filterträger (5), in den das Kaffeemehl (9) gegeben wird und der im Gehäuse beweglich montiert ist, und einer Abmeßvorrichtung (10) für das in den Filterträger (5) gegebene Kaffeemehl, die bewegliche mechanische Mittel (35) aufweist, die mit dem Filterträger (5) gekoppelt sind, auf die Menge des in den Filterträger (5) gefüllten Kaffeemehls (9) reagieren und geeignet sind, ein Sichtanzeigelement (36) der gewünschten Menge Kaffeemehl anzutreiben, **dadurch gekennzeichnet, daß** die mechanischen Mittel (35) ein Schwenkteil (38) aufweisen, das um eine feste Achse (39) im Gehäuse schwenkbar montiert ist und an dem der Filterträger (5) aufliegend angeordnet ist, wobei das Schwenkteil (38) auf der einen Seite das Sichtanzeigeelement (36) und auf der dem Sichtanzeigeelement (36) bezüglich seiner Schwenkachse (39) gegenüberliegenden Seite mindestens ein Gewichtsausgleichselement (41) aufweist, das es ermöglicht, das Teil (38) in einer stabilen Position zu halten, wenn die gewünschte Menge Kaffeemehl erreicht ist.

2. Tropfkaffeemaschine nach Anspruch 1, **dadurch gekennzeichnet, daß** das Schwenkteil (38) aus einem U-förmigen Waagebalken (42) besteht, der sich quer um den Filterträger (5) erstreckt und dessen zwei seitliche Arme (44) an zwei in einer Linie liegenden und vom Gehäuse (1) getragenen Zapfen (45, 46) angelenkt sind, welche die Schwenkachse (39) des Waagebalkens (42) definieren, dessen Mittelarm (47) mit dem Sichtanzeigeelement (36) versehen ist und dessen freie Enden der zwei seitlichen Arme (44) jeweils mit zwei Gewichtsausgleichelementen (41) versehen sind, wobei der Filterträger (5) zwei Auflagemittel (50) aufweist, die jeweils auf den zwei seitlichen Armen (44) des U-förmigen Waagebalkens (42) aufliegen.

3. Tropfkaffeemaschine nach Anspruch 2, **dadurch gekennzeichnet, daß** die zwei Auflagemittel (50) jeweils aus zwei Füßen (53) bestehen, die von der Seitenwand (54) des Filterträgers (5) vorspringen und auf zwei Auflagezonen (55) von geeignetem Profil aufliegen, die jeweils auf den zwei seitlichen Armen (44) des U-förmigen Waagebalkens (42) ausgebildet und in der Nähe der freien Enden dieser zwei Arme (44) angeordnet sind.

4. Tropfkaffeemaschine nach Anspruch 2 oder 3, **dadurch gekennzeichnet, daß** die zwei Gewichtsausgleichelemente (41) jedes aus einer Metallscheibe (51) bestehen, die eine Ausgleichsmasse bildet, die in einem an jedem freien Ende der zwei seitlichen Arme (44) des U-förmigen Waagebalkens (42) ausgebildeten Sitz angeordnet ist.

5. Tropfkaffeemaschine nach einem der Ansprüche 2 bis 4, **dadurch gekennzeichnet, daß** der U-förmige Waagebalken (42) durch eine Zugfeder (57) beaufschlagt ist, von der ein Ende am Mittelarm (47) des Waagebalkens (42) verankert ist und deren anderes Ende an einer Tarierscheibe (59) angehängt ist, die im Gehäuse (1) unterhalb der Schwenkachse (39) des Waagebalkens (42) angeordnet ist und die Einstellung der Spannung der Feder (57) ermöglicht.

6. Tropfkaffeemaschine nach einem der vorangehenden Ansprüche, **dadurch gekennzeichnet, daß** das Schwenkteil (38) und das Sichtanzeigeelement (36) einstückig aus einem Kunststoffmaterial hergestellt sind.

7. Tropfkaffeemaschine nach einem der vorangehenden Ansprüche, bei der der Filterträger (5) durch einen mit dem Gehäuse (1) fest verbundenen Deckel geschlossen werden kann und mit einem Boden (12), der mit einer Ablauföffnung (14) versehen ist, die mit einem Klappenventil (18) zusammenwirkt, dessen Öffnen und Schließen von einem Hebel (20) gesteuert wird, der im Gehäuse (1) schwenkbar montiert und mittels eines (22) seiner Enden mit dem Filterträger (5) in Berührung ist, **dadurch gekennzeichnet, daß** sie außerdem einen Mechanismus (67) aufweist, der das Unterbrechen der Berührung zwischen dem Hebel (20) und dem Filterträger (5) beim Öffnen des Deckels (11) vor Benutzung der Abmeßvorrichtung (10) für das Kaffeemehl ermöglicht.

8. Tropfkaffeemaschine nach Anspruch 7, **dadurch gekennzeichnet, daß** der Unterbrechungsmechanismus (67) einen vertikal am Gehäuse (1) montierten Schieber (69) aufweist, der ein oberes Ende (69a) aufweist, das mit dem Deckel (11) durch ein nachgiebiges Scharnier (70) verbunden ist, sowie ein unteres Ende (69b) aufweist, das mit mindestens einem Schlitz versehen ist, der eine Kurve (72) bildet, in der sich die Schwenkachse (21) des Hebels (20) verschieben kann, der zu diesem Zweck im Gehäuse (1) beweglich montiert ist, wobei der Schieber (69) beim Öffnen des Deckels (11) mit einer aufsteigenden Translationsbewegung bewegt wird, in deren Verlauf sich der Hebel (20) vom Filterträger (5) wegen der Verschiebung der Achse (21) des Hebels (20) trennt.
